# DEMANDE DE BREVET EUROPEEN

(11) **EP 1 568 898 A1**
(43) Date de publication de la demande: **31.08.2005**
(21) Numéro de dépôt: 05354009.2
(22) Date de dépôt: 24.02.2005
(51) Int. Cl.: F16B 12/20

(54) **Dispositif d'assemblage de deux pièces disposées l'une contre l'autre, notamment pour l'assemblage de meubles, verrouillage de panneaux ou fixation de manches**

(30) Priorité: 27.02.2004 FR 0402041
(71) Demandeur: Saunion, Maxime, 74440 Mieussy (FR)
(72) Inventeur: Saunion, Maxime, 74440 Mieussy (FR)
(74) Mandataire: Jouvray, Marie-Andrée

(57) **Abrégé**

Le dispositif d'assemblage entre des première et seconde pièces disposées l'une contre l'autre comporte un organe de saisie, solidaire d'un premier élément d'assemblage, et un organe d'accrochage (5), logé dans un second élément d'assemblage (6), comportant un crochet (9), un levier de préhension (10), une tringle (12) et des moyens de réglage de la tension du crochet (9) sur l'organe de saisie. Les moyens de réglage comportent une molette de réglage (17) solidaire de la tringle (12) et disposée, de préférence, entre des premier (13) et second (14) axes d'articulation de la tringle (12), de manière à être accessible en position d'ouverture du levier de préhension (10). Le levier de préhension (10) peut comporter une fente (18), au niveau de son extrémité de préhension, de préférence associée à un anneau de préhension mobile.

## Description

### Domaine technique de l'invention

L'invention concerne un dispositif d'assemblage entre des première et seconde pièces disposées l'une contre l'autre comportant :
- un premier élément d'assemblage, solidaire de la première pièce, et comportant un organe de saisie en saillie par rapportà la première pièce,
- un second élément d'assemblage, solidaire de la seconde pièce,
- un organe d'accrochage comportant un crochet, destiné à coopérer, dans une position de verrouillage, avec l'organe de saisie et monté à rotation sur un levier de préhension, accessible de l'extérieur et destiné à positionner le dispositif d'assemblage dans une position d'ouverture ou de verrouillage, le levier étant monté à rotation et à coulissement longitudinal sur le second élément d'assemblage,
- une tringle, traversant transversalement un premier axe d'articulation monté à rotation sur le second élément d'assemblage et un second axe d'articulation monté à rotation sur le levier de préhension,
- l'organe d'accrochage comportant des moyens de réglage comportant, sur la tringle, des zones filetées pour permettre le réglage de la distance entre les premier et second axes d'articulation de la tringle.

### État de la technique

Il est déjà connu dans le domaine de la menuiserie, notamment pour l'assemblage de meubles, par exemple, pour verrouillage de panneaux ou fixation de manches, un mode d'assemblage par emboîtement dit « à tenon et mortaise » selon lequel deux profilés sont assemblés l'un à l'autre par introduction d'un tenon, ménagé en bout d'un profilé, à l'intérieur d'une mortaise, ménagée dans la tranche d'un autre profilé. L'emboîtement ainsi réalisé est verrouillé par chevillage, c'est-à-dire par passage en force d'une cheville conjointement à travers les deux profilés assemblés, ou encore par collage entre les surfaces des profilés en contact les unes avec les autres.

La mise en oeuvre de ce type de dispositif est délicate et nécessite l'intervention d'un spécialiste. De même, il ne permet pas le démontage des profilés assemblés, sinon à risquer leur détérioration. Également, il n'offre pas la possibilité d'ajuster l'assemblage des profilés entre eux, notamment lors de la réinstallation d'un meuble ou encore au cours du temps.

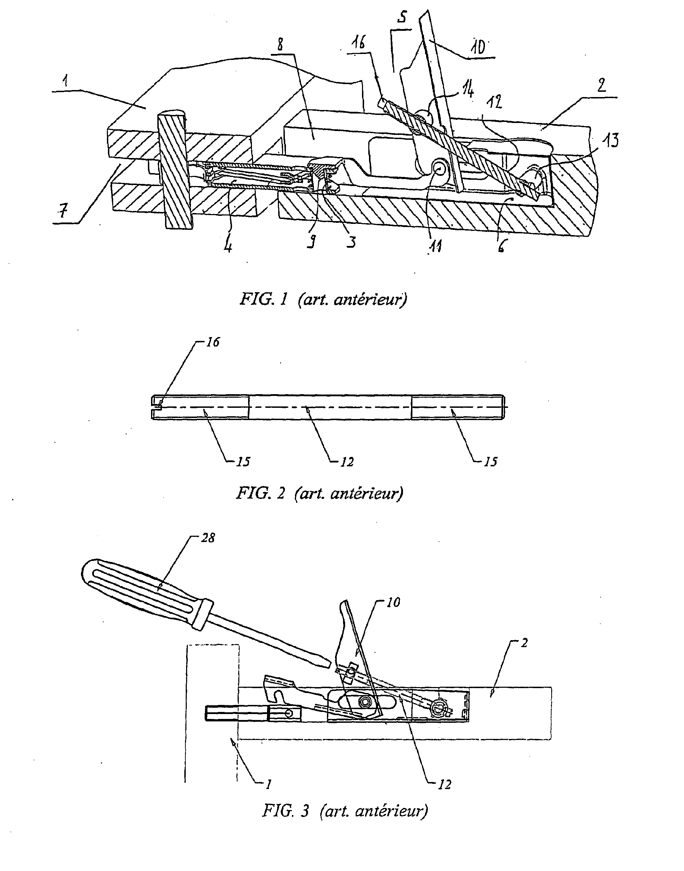

À cet effet, le document FR-A-2 807 797 propose un dispositif d'assemblage robuste, solide et, surtout, réversible pour relier par son bout une pièce contre l'une des faces d'une autre pièce. Sur la figure 1, le dispositif d'assemblage entre une première pièce 1 et une seconde pièce 2 comporte, respectivement, un organe de saisie 3, appartenant à un premier élément d'assemblage 4 et un organe d'accrochage 5, appartenant à un second élément d'assemblage 6. Le premier élément d'assemblage 4 est logé partiellement à l'intérieur d'un évidement 7 réalisé dans la première pièce 1. L'évidement 7 est, de préférence, un évidement borgne. Le second élément d'assemblage 6 est solidaire de la seconde pièce 2 et logé à l'intérieur d'un évidement 8 réalisé dans la seconde pièce 2. L'évidement 8 est débouchant vers l'extérieur, sur l'une des faces de la seconde pièce 2, pour permettre le logement du second élément d'assemblage 6. L'organe d'accrochage 5 comporte un crochet 9, conformé de manière à coopérer avec l'organe de saisie 3 équipant le premier élément d'assemblage 4, et un levier de préhension 10 pour positionner le dispositif d'assemblage dans une position, respectivement, d'ouverture ou de verrouillage. Le crochet 9 est monté à rotation autour d'un axe 11 par rapport au levier de préhension 10. Le levier de préhension 10 est monté à rotation autour du même axe 11 par rapport au second élément d'assemblage 6. Le levier 10 est, également, monté à coulissement par rapport au second élément d'assemblage 6. Le dispositif comporte une tringle 12, traversant transversalement un premier axe d'articulation 13, lequel est monté à rotation sur le second élément d'assemblage 6, et un second axe d'articulation 14, lequel est monté à rotation sur le levier de préhension 10.

Comme représenté sur la figure 2, l'organe d'accrochage 5 comporte des moyens de réglage comportant, notamment sur la tringle 12, des zones filetées 15, situées au niveau des premier 13 et second 14 axes d'articulation, et une encoche 16, en bout de tringle 12, ladite encoche 16 étant destinée à recevoir la tête d'un tournevis standard 28 à tête plate, afin de régler la distance entre les premier 13 et second 14 axes d'articulation, pour ajuster la tension de crochetage du crochet 9 sur l'organe de saisie 3.

Comme représenté sur la figure 3, l'encoche 16 de la tringle 12 n'est accessible que lorsque le levier de préhension 10 est en position haute. La mise en oeuvre du dispositif s'avère être fastidieuse, car le levier de préhension 10 est difficile à saisir, quelle que soit sa position, son extrémité de préhension étant très proche de la première pièce 1 et très difficile d'accès, même avec le tournevis 28.

### Objet de l'invention

L'invention a pour but un dispositif d'assemblage ne présentant pas ces inconvénients et, plus particulièrement, un dispositif d'assemblage améliorant la manipulation du levier de préhension et le réglage de la tension de crochetage de ce type de dispositif d'assemblage déjà connu.

Selon l'invention, ce but est atteint par les revendications annexées et, plus particulièrement, par le fait que les moyens de réglage de l'organe d'accrochage comportent une molette de réglage solidaire de la tringle et accessible en position d'ouverture du levier de préhension.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une vue en coupe d'un dispositif d'assemblage selon l'art antérieur.
La figure 2 représente une tringle d'un dispositif d'assemblage selon la figure 1.
La figure 3 représente schématiquement deux pièces assemblées par le dispositif d'assemblage selon la figure 1.
La figure 4 représente un premier mode de réalisation du second élément d'assemblage avec son organe d'accrochage correspondant selon l'invention.
La figure 5 représente une vue de dessus du levier de préhension du dispositif d'assemblage selon la figure 4.
La figure 6 représente schématiquement l'extrémité du levier muni d'un anneau de préhension rabattable selon la figure 5.
Les figures 7 à 10 représentent différents modes de réalisation du premier élément d'assemblage avec l'organe de saisie correspondant selon l'invention.
La figure 11 représente une variante de réalisation du dispositif d'assemblage selon l'invention.

### Description de modes particuliers de réalisation

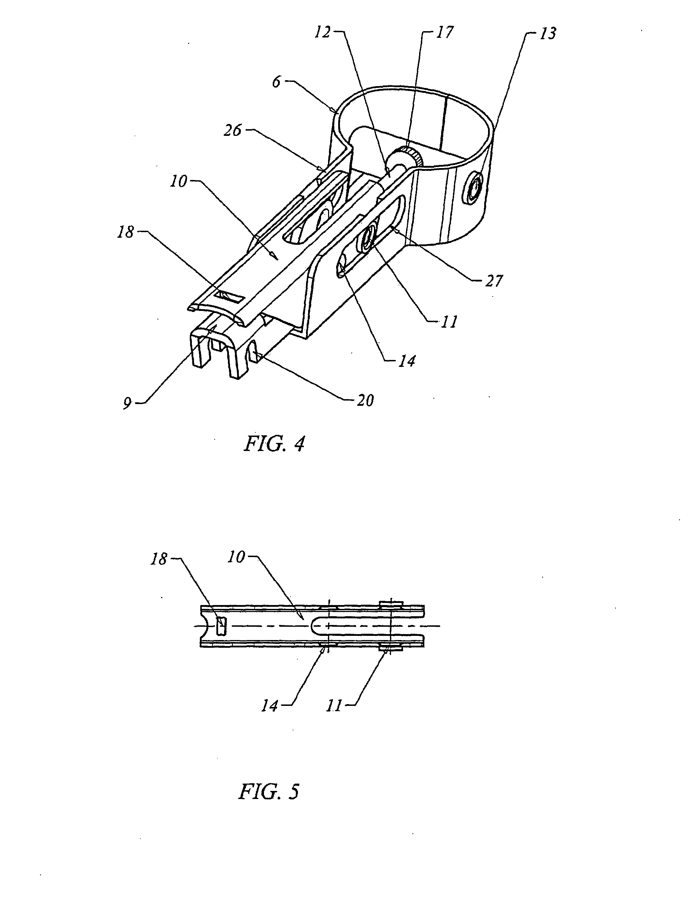

Sur la figure 4, une molette de réglage 17 est solidaire de la tringle 12. Elle est située entre les premier 13 et second 14 axes d'articulation de la tringle 12, afin d'être accessible facilement en position d'ouverture du levier de préhension 10. La molette de réglage 17 est située, de préférence, au niveau du premier axe d'articulation 13, car cette zone correspond à une zone de la tringle 12 facilement accessible de l'extérieur. Les zones filetées 15 de la tringle 12 sont situées, de préférence, au niveau des axes d'articulation 13 et 14. La molette de réglage 17 est donc située, de préférence, entre les deux zones filetées 15 de la tringle 12.

Dans une variante de réalisation non représentée, il est possible de prévoir une seule zone filetée 15 sur la tringle 12, uniquement au voisinage de l'axe d'articulation 14. En effet, l'axe d'articulation 13 est fixe par rapport à la tringle 12, contrairement à l'axe d'articulation 14, qui est lié au levier 10 et qui se déplace le long de la tringle 12. L'axe d'articulation 13 est alors dépourvu de filetage intérieur et sert uniquement de guidage pour la tringle 12.

À titre d'exemple, la molette de réglage 17 a un diamètre de l'ordre de 10mm et une épaisseur de l'ordre de 1,5mm. Elle comporte, de préférence, une série de cannelures sur l'ensemble de son contour (figure 4). Les cannelures permettent aux doigts de l'utilisateur de bien rester en contact avec la molette 17 lors de sa manipulation.

Le crochet 9 présente, de préférence, une section en U avec deux branches comportant chacune un évidement 20 de retenue, destiné à coopérer avec l'organe de saisie 3 du premier élément d'assemblage 4.

Selon un mode de réalisation préférentiel, le second élément d'assemblage 6 comporte une partie en forme de U, avec deux parois latérales 26 entre lesquelles est situé l'organe d'accrochage 5. Les deux parois latérales 26 comportent chacune une lumière 27, de préférence, de forme oblongue. Ces lumières 27 sont des lumières de guidage longitudinal de l'axe de rotation 11 du crochet 9 et du levier de préhension 10, lors du réglage de la tension de crochetage. Lors du positionnement du dispositif d'assemblage dans sa position d'ouverture ou de verrouillage, ou lors du réglage de la tension du crochet 9 sur l'organe de saisie 3, le levier de préhension 10 pivote autour de l'axe 11 et le crochet 9 coulisse simultanément le long du second élément d'assemblage 6 grâce aux lumières 27.

Lorsque le levier 10 est en position d'ouverture, l'actionnement de la molette 17 provoque une variation de la distance entre les axes d'articulation 13 et 14 de la tringle 12. L'axe d'articulation 14 coulisse avec le levier 10 le long de la tringle 12 et entraîne simultanément dans sa course le crochet 9, qui coulisse longitudinalement à l'intérieur du second élément d'assemblage 6 par l'intermédiaire des lumières 27 de forme oblongue. Le réglage de la tension de crochetage s'effectue en position d'ouverture, quand le levier de préhension 10 est en position haute (figures 1 et 3). Le réglage de la molette de réglage 17 n'est donc possible qu'une fois le levier de préhension 10 ouvert.

Le réglage s'effectue lorsque le crochet 9 est déjà en place sur l'organe de saisie 3. Il est ainsi plus facile de régler le dispositif d'assemblage, car la tension de crochetage entre le crochet 9 et l'organe de saisie 3 n'est pas encore maximale après un simple positionnement du crochet 9 sur l'organe de saisie 3. Plus la distance est grande entre les deux axes 13 et 14, moins la tension du crochet 9 sur l'organe de saisie 3 sera importante lors de la fermeture du levier 10. Plus la distance est faible entre les axes 13 et 14, plus la tension du crochet 9 sur l'organe de saisie 3 sera importante lors de la fermeture du levier 10.

Comme représenté sur les figures 4 et 5, une fente 18 est réalisée sur l'extrémité du levier 10 correspondant à la zone de préhension du levier 10 par un utilisateur. Cette fente 18 est réalisée afin de faciliter la préhension et l'utilisation du levier 10. La fente 18, traversant complètement la paroi du levier de préhension 10, est disposée soit transversalement (figure 5) soit longitudinalement par rapport à la surface supérieure du levier de préhension 10. Elle permet ainsi, par l'intermédiaire, par exemple, d'un tournevis standard à tête plate, de soulever très facilement le levier de préhension 10. L'utilisation du levier 10 et du dispositif d'assemblage est ainsi beaucoup plus aisée. Il suffit à l'utilisateur d'introduire la tête du tournevis à l'intérieur de la fente 18 et, grâce à un mouvement de levier effectué en appuyant le tournevis contre la surface supérieure du levier de préhension 10, de soulever le levier de préhension 10 en ramenant le tournevis vers l'extérieur.

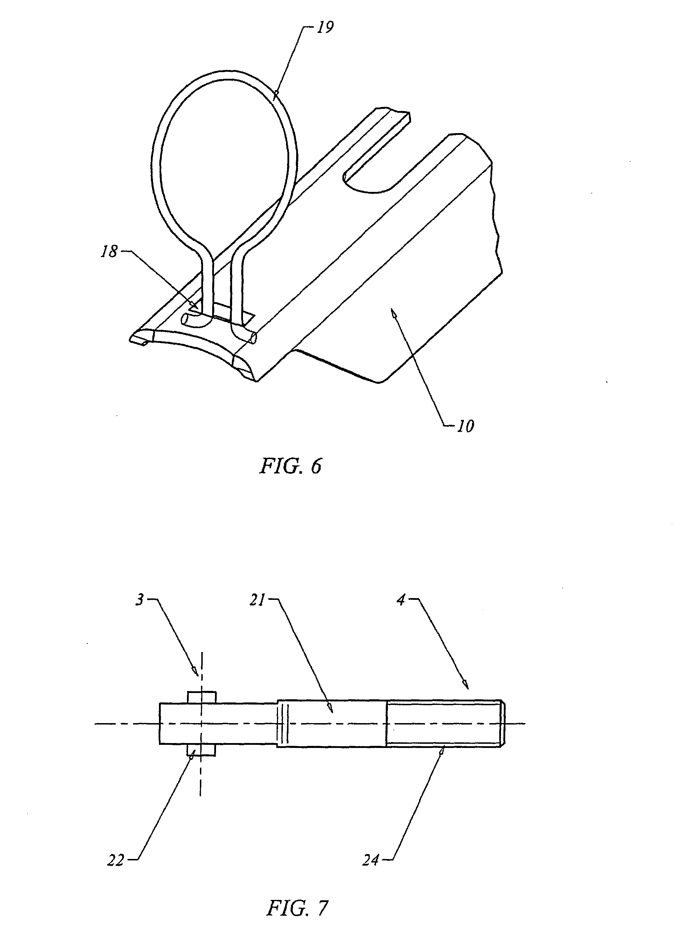

Dans une variante de réalisation représentée figure 6, le levier de préhension 10 comporte un anneau de préhension 19 mobile. L'anneau 19, d'un diamètre intérieur de l'ordre du diamètre d'un doigt, est conformé de manière à se clipser sur la surface supérieure du levier de préhension 10. L'anneau 19 est clipsé, de préférence, dans la fente 18 réalisée transversalement sur la surface supérieure du levier 10. L'épaisseur de l'anneau 19 est, de préférence, faible afin de ne pas trop dépasser du dispositif d'assemblage, lorsque l'anneau 19 est rabattu sur la surface supérieure du levier 10. Grâce à cet anneau de préhension 19 rabattable, l'utilisateur n'a plus besoin d'un objet extérieur, notamment d'un tournevis, pour manipuler le levier de préhension 10. Il suffit à l'utilisateur de saisir l'anneau de préhension 19, monté à rotation sur la surface supérieure du levier 10, et de le tirer vers l'extérieur pour positionner le levier 10 en position d'ouverture.

Sur les figures 7 à 10, le premier élément d'assemblage 4, comportant l'organe de saisie 3, peut revêtir différentes formes. Sur la figure 7, le premier élément d'assemblage 4 comporte une tige centrale 21 munie, à son extrémité libre, de deux saillies 22 constituant l'organe de saisie 3 coopérant avec les évidements 20 du crochet 9 (figure 4).

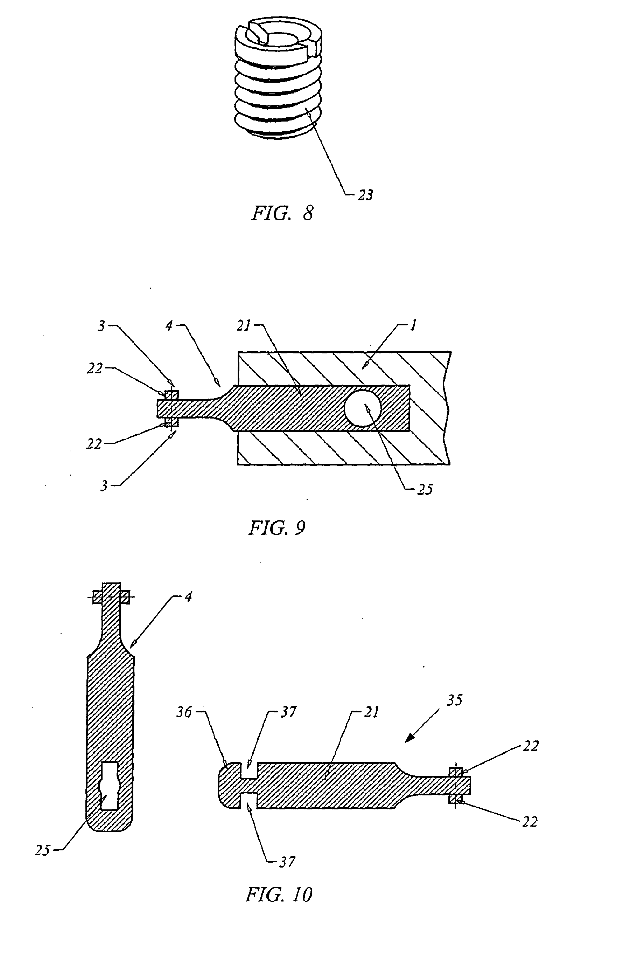

Le premier élément d'assemblage 4 est, de préférence, solidaire de la première pièce 1 par l'intermédiaire, par exemple, d'un insert fileté 23 (figure 8) introduit dans l'évidement 7 de la première pièce 1. À cet effet, l'évidement 7 est réalisé de manière à recevoir l'insert fileté 23 et le premier élément d'assemblage 4 comporte une zone filetée 24 (figure 7), sur l'extrémité opposée à l'extrémité libre comportant les saillies 22, d'une longueur correspondant sensiblement à la longueur de l'insert fileté 23. Une fois le premier élément d'assemblage 4 vissé complètement à l'intérieur de l'insert fileté 23, introduit au préalable dans l'évidement 7 de la première pièce 1, le premier élément d'assemblage 4 est solidaire de la première pièce 1, car il est bloqué, à la fois, en rotation et en translation.

Sur la figure 9, le premier élément d'assemblage 4 se distingue de celui représenté sur la figure 7 par la forme de la tige centrale 21. En effet, la tige centrale 21 est conformée de manière à s'adapter à l'évidement 7 de la première pièce 1, qui peut être, par exemple, de forme polygonale. La forme de l'évidement 7 est, de préférence, non circulaire et complémentaire de celle de la tige centrale 21, afin d'empêcher la rotation du premier élément d'assemblage 4 à l'intérieur de la première pièce 1. Le premier élément d'assemblage 4 est ainsi maintenu dans une position prédéterminée. L'évidement 7 et la tige centrale 21 sont, par exemple, de forme rectangulaire, carrée ou hexagonale.

La tige centrale 21 comporte, également, un orifice débouchant 25. L'orifice 25 est réalisé à l'extrémité de la tige centrale 21 opposée à l'organe de saisie 3. L'orifice 25 est destiné à recevoir une cheville de blocage (non représentée), afin de maintenir le premier élément d'assemblage 4 à l'intérieur de la première pièce 1 et de le bloquer en translation. Le premier élément d'assemblage 4 est ainsi bloqué en rotation, grâce à sa forme particulière complémentaire de celle de l'évidement 7, et en translation, par l'intermédiaire de la cheville de blocage. La tige centrale 21 comporte également, à l'extrémité libre du premier élément d'assemblage 4, les deux saillies 22 constituant l'organe de saisie 3.

La variante de réalisation représentée figure 10 se distingue des précédentes par la forme de l'orifice 25 du premier élément d'assemblage 4. En effet, l'orifice 25 est conformé de manière à s'adapter à un élément d'assemblage supplémentaire 35 appartenant, par exemple, à une troisième pièce (non représentée) participant à l'assemblage d'un meuble selon une application particulière. Cet élément 35 permet d'effectuer la liaison entre la troisième pièce et la première pièce 1 et comporte une tige centrale 21 et deux saillies 22 destinées à coopérer avec un crochet d'un autre élément d'assemblage (non représenté).

L'élément 35 comporte une extrémité 36, destinée à s'insérer dans l'orifice 25 du premier élément d'assemblage 4, comportant deux évidements 37 de largeur suffisante pour être complémentaire de l'épaisseur du premier élément d'assemblage 4. L'extrémité 36 est introduite dans l'orifice 25 et le blocage en translation des deux éléments d'assemblage 4 et 35 s'effectue en déplaçant en rotation l'élément 35 d'un quart de tour. Les deux évidements 37 se positionnent alors perpendiculairement à l'orifice 25 du premier élément d'assemblage 4, l'extrémité 37 se trouvant d'un côté de l'élément 4 et la tige 21 de l'autre côté. Cette variante de réalisation est appelée assemblage à l'équerre, car les deux éléments 4 et 35 sont sensiblement perpendiculaires en position d'assemblage.

Les dispositifs d'assemblage décrits ci-dessus procurent, notamment, les avantages suivants. Ils permettent, d'une part, un démontage rapide des différentes pièces assemblées, grâce à la manipulation aisée du levier de préhension 10, et offrent la possibilité d'intervenir ultérieurement sur le serrage de l'assemblage obtenu, grâce à la molette de réglage 17. D'autre part, l'accès au réglage de la tension du crochet 9 sur l'organe de saisie 3 est facilité, grâce à la molette de réglage 17 accessible en position d'ouverture du levier 10, et le relevage du levier de préhension 10 est facilité, grâce à la fente 18 ou à l'anneau 19.

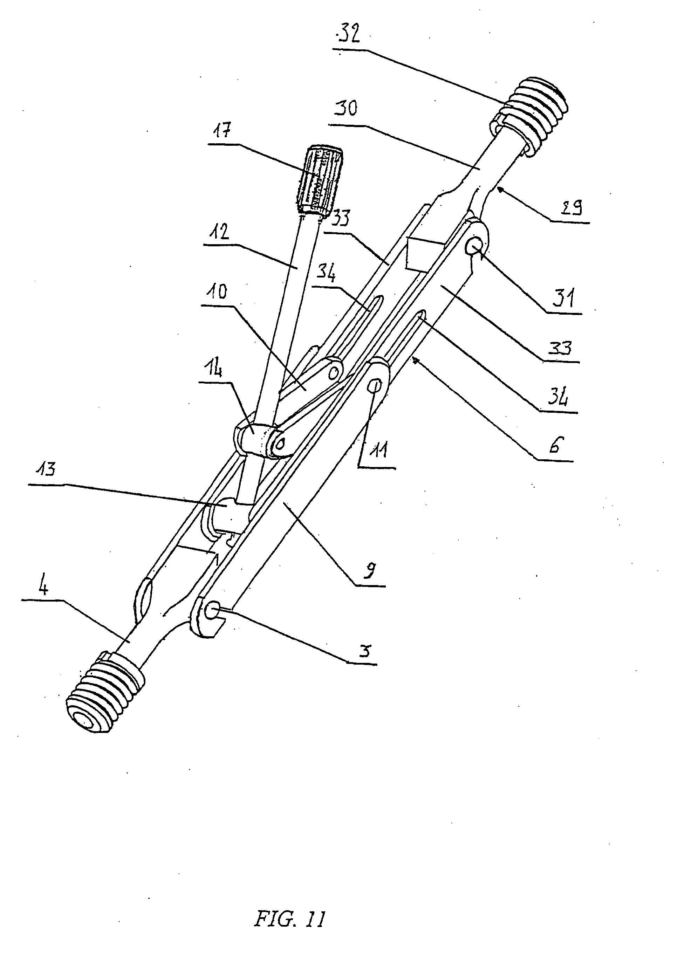

La variante de réalisation représentée sur la figure 11 se distingue des modes de réalisation précédents par la forme du second élément d'assemblage 6, par la forme du levier de préhension 10 et par la position de la molette de réglage 17. La molette de réglage 17 est disposée à l'extrémité libre de la tringle 12. Dans ce mode de réalisation, la tringle 12 fait office de levier de préhension. La molette 17 comporte, de préférence, une série de cannelures sur son contour, afin de faciliter la manipulation et le réglage de la tringle 12 par un utilisateur. La tringle 12 traverse transversalement les axes d'articulations 13 et 14, montés à rotation, respectivement, sur le second élément d'assemblage 6 et sur le levier 10, qui ne fait plus office de levier de préhension mais de biellette de liaison entre la tringle 12 et le crochet 9. La tringle 12 comporte, de préférence, une zone filetée au niveau de l'axe 14 pour pouvoir régler la distance entre les axes d'articulations 13 et 14, afin de régler la tension de crochetage.

Le second élément 6, comportant le crochet 9, est conformé, sur son extrémité opposée au crochet 9, de manière à s'adapter à un troisième élément d'assemblage 29, qui est, de préférence, identique au premier élément d'assemblage 4. Il comporte une tige centrale 30, deux saillies 31 et coopère avec un insert fileté 32 introduit dans la seconde pièce 2. Le troisième élément d'assemblage 29 est donc bloqué en rotation et en translation dans la seconde pièce 2. Le second élément d'assemblage 6 comporte deux branches latérales 33, comportant chacune une lumière de guidage 34, de préférence, de forme oblongue. Le second élément d'assemblage 6 comporte, de préférence, une butée de fin de course (non représentée) de la tringle 12, dans sa rotation par rapport au levier 10, correspondant à la position de verrouillage du dispositif. La butée de fin de course de la tringle 12 est située entre les branches 33 du second élément d'assemblage 6. En position de verrouillage, la tringle 12 vient donc se placer entre les branches 33, afin de réduire sensiblement l'encombrement du dispositif d'assemblage.

Lorsque la tringle 12 est en position haute, l'actionnement de la molette 17 provoque une variation de la distance entre les axes d'articulation 13 et 14 de la tringle 12. L'axe d'articulation 14 remonte le long de la tringle 12, entraînant dans sa course le levier 10, tandis que l'axe 11 du levier 10 coulisse le long des lumières 34, entraînant simultanément dans sa course le crochet 9. La tension de crochetage augmente ou diminue en même temps que le crochet 9 coulisse à l'intérieur du second élément d'assemblage 6.

Le réglage de la tension de crochetage s'effectue en position d'ouverture, c'est-à-dire quand la tringle 12 est en position haute (figure 11). Le réglage s'effectue dans cette position, car la tension de crochetage entre le crochet 9 et l'organe de saisie 3 n'est pas encore maximale, après un simple positionnement du crochet 9 sur l'organe de saisie 3.

L'invention n'est pas limitée aux différents modes de réalisation décrits ci-dessus. Particulièrement, il est possible de prévoir un crochet 9 et un premier élément d'assemblage 4 avec des formes différentes. Le premier élément d'assemblage 4 peut être formé, par exemple, par une armature en forme de U avec deux branches latérales venant en contact avec les parois latérales de l'évidement 7 de la première pièce 1. L'armature en U comporte alors un petit axe reliant, de manière sensiblement perpendiculaire, les deux branches de l'armature à leurs extrémités. Ce petit axe constitue l'organe de saisie 3 et coopère avec le crochet 9 conformé de manière à coopérer avec l'organe de saisie 3. L'évidement 7 de la première pièce 1 est de forme complémentaire à celle de l'armature pour la bloquer en rotation, et le premier élément d'assemblage 4 est bloqué en translation, par exemple, par une cheville de blocage.

Le troisième élément d'assemblage 29 peut également revêtir différentes formes, notamment la forme représentée sur la figure 9 ou la forme décrite ci-dessus, avec une armature en forme de U et un petit axe reliant les deux branches du U.

Les différents éléments d'assemblage peuvent être positionnés en relief sur les pièces d'assemblage et non dans des évidements. Ils sont alors calés et fixés sur les pièces, par exemple, par des vis, et le serrage s'effectue selon l'un des différents modes de réalisation décrits ci-dessus.

## Revendications

1. Dispositif d'assemblage entre des première (1) et seconde (2) pièces disposées l'une contre l'autre comportant :
- un premier élément d'assemblage (4), solidaire de la première pièce (1), et comportant un organe de saisie (3) en saillie par rapport à la première pièce (1),
- un second élément d'assemblage (6), solidaire de la seconde pièce (2),
- un organe d'accrochage (5) comportant un crochet (9), destiné à coopérer, dans une position de verrouillage, avec l'organe de saisie (3) et monté à rotation sur un levier de préhension (10), accessible de l'extérieur et destiné à positionner le dispositif d'assemblage dans une position d'ouverture ou de verrouillage, le levier (10) étant monté à rotation et à coulissement longitudinal sur le second élément d'assemblage (6),
- une tringle (12), traversant transversalement un premier axe d'articulation (13) monté à rotation sur le second élément d'assemblage (6) et un second axe d'articulation (14) monté à rotation sur le levier de préhension (10),
- l'organe d'accrochage (5) comportant des moyens de réglage comportant, sur la tringle (12), des zones filetées (15) pour permettre le réglage de la distance entre les premier (13) et second (14) axes d'articulation de la tringle (12),
dispositif **caractérisé en ce que** les moyens de réglage de l'organe d'accrochage (5) comportent une molette de réglage (17) solidaire de la tringle (12) et accessible en position d'ouverture du levier de préhension (10).

2. Dispositif selon la revendication 1, **caractérisé en ce que** la molette de réglage (17) et disposée entre les premier (13) et second (14) axes d'articulation de la tringle (12).

3. Dispositif selon l'une des revendications 1 et 2, **caractérisé en ce que** le levier de préhension (10) comporte une fente (18) disposée au niveau de son extrémité de préhension.

4. Dispositif selon l'une quelconque des revendications 1 à 3, **caractérisé en ce que** le levier de préhension (10) comporte un anneau de préhension (19).

5. Dispositif selon l'une quelconque des revendications 1 à 4, **caractérisé en ce que** le crochet (9) présente une section en U avec deux branches comportant chacune un évidement (20) destiné à coopérer avec l'organe de saisie (3).

6. Dispositif selon la revendication 5, **caractérisé en ce que** le premier élément d'assemblage (4) comporte une tige centrale (21), solidaire de la première pièce (1) et munie, à son extrémité libre, de deux saillies latérales (22), constituant l'organe de saisie (3) et destinées à coopérer avec les évidements (20) du crochet (9) de l'organe d'accrochage (5).

7. Dispositif selon l'une quelconque des revendications 1 à 6, **caractérisé en ce que** le premier élément d'assemblage (4) est solidarisé avec la première pièce (1) par l'intermédiaire d'un insert fileté (23) introduit dans la première pièce (1).

8. Dispositif selon l'une quelconque des revendications 1 à 6, **caractérisé en ce que** le premier élément d'assemblage (4) comporte, à l'intérieur de la première pièce (1), un orifice (25) destiné à recevoir une cheville de blocage du premier élément d'assemblage (4) dans la première pièce (1).

9. Dispositif selon la revendication 8, **caractérisé en ce que** le premier élément d'assemblage (4) est disposé dans un évidement (7) de la première pièce (1), de forme complémentaire non circulaire, le maintenant dans une position prédéterminée.

10. Dispositif selon l'une quelconque des revendications 1 à 9, **caractérisé en ce que** le deuxième élément d'assemblage (6) comporte une partie en forme de U ayant deux parois latérales (26) comportant chacune une lumière (27), de forme oblongue, de guidage longitudinal de l'axe de rotation (11) du levier de préhension (10).

11. Dispositif selon la revendication 1, **caractérisé en ce que** la molette de réglage (17) est située au bout de la tringle (12), ladite tringle (12) faisant office de levier de préhension et étant destinée à positionner le dispositif dans une position d'ouverture ou de verrouillage.

12. Dispositif selon la revendication 11, **caractérisé en ce que** le second élément d'assemblage (6) est solidaire de la seconde pièce (2) par l'intermédiaire d'un troisième élément d'assemblage (29), conformé de manière à coopérer avec un insert fileté (32) introduit dans la seconde pièce (2).

13. Dispositif selon l'une des revendications 11 et 12, **caractérisé en ce que**, le second élément d'assemblage (6) comportant deux branches latérales (33), le second élément d'assemblage (6) comporte une butée, disposée entre les branches latérales (33), de fin de course de la tringle (12) lors du verrouillage du dispositif.
